# EUROPEAN PATENT SPECIFICATION

(11) **EP 2 784 390 B1**
(45) Date of publication and mention of the grant of the patent: **28.09.2022**
(21) Application number: 12851927.9
(22) Date of filing: 13.11.2012
(51) Int. Cl.: F23M 11/04, F23N 5/00, F02C 9/00, G05B 19/042, G06F 11/20

(54) **APPARATUS FOR DISPLAYING THE STATE OF A MULTI-CONTROL SYSTEM OF A POWER PLANT**
VORRICHTUNG ZUR ANZEIGE DES ZUSTANDS EINES MULTISTEUERUNGSSYSTEMS EINES KRAFTWERKS
APPAREIL PERMETTANT D'AFFICHER L'ÉTAT D'UN SYSTÈME DE COMMANDE MULTIPLE D'UNE CENTRALE

(30) Priority: 21.11.2011 KR 20110121728; 12.11.2012 KR 20120127679
(43) Date of publication of application: 01.10.2014
(73) Proprietor: Doosan Heavy Industries & Construction Co., Ltd., Changwon-si, Gyeongsangnam-do 641-792 (KR)
(72) Inventor: PARK, Tae Hoon, Daejeon 305-728 (KR); HWANG, Jae Pil, Daejeon 305-793 (KR); KIM, Sung Ho, Gyeonggi-do, 448-830 (KR); YOOK, Sim Kyun, Daejeon 302-777 (KR)
(74) Representative: BCKIP
(86) International application number: PCT/KR2012/009532
(87) International publication number: WO 2013/077583

(56) References cited:
- KR-B1- 100 980 699
- KR-B1- 950 011 977
- KR-B1- 970 004 261
- KR-Y1- 200 331 218
- US-A- 4 521 871
- US-A- 5 132 920
- Siemens: "SIMATIC Dezentrales Peripheriegerät ET 200M", Internet, 1 December 2008 (2008-12-01), XP002754983, Retrieved from the Internet: URL:http://www.grollmus.de/simatic-schulun g/simatic-dokumentation.html?file=files/co ntent/download/documentation/ET%20200M%20B etriebsanleitung.pdf [retrieved on 2016-05-30]
- MITEQ: "TECHNICAL NOTE 25T065 NSU REDUNDANT SWITCHOVER SYSTEM", Internet, 1 December 2006 (2006-12-01), XP002754984, Retrieved from the Internet: URL:https://miteq.com/docs/25T065E.PDF [retrieved on 2016-05-30]

## Description

### TECHNICAL FIELD

The present invention relates to an apparatus for displaying a state of a multi-control system of a power plant.

### BACKGROUND ART

Generally, a multiplexing method is widely used as a method for enhancing reliability of a system. As the multiplexing method, a duplex system and a triplex system are mainly used. The duplex system and the triplex system have different designs and purposes. The conventional multi-control system of a power plant serves to control a duplex system and a triplex system. In a case where different types of multiplexing systems (duplex system and triplex system) are simultaneously performed, it is difficult to distinguish a multiplexing mode where the multi-control system of a power plant is operated. Further, it is also difficult to distinguish a state of the duplex system and the triplex system.

Siemens: "SIMATEC Dezentrales Peripherieqerät ET 200M", 2008, describes a modular I/O station for a control cabinet with high density-channel applications.

MITEQ: "TECHNICAL NOTE 25T065 NSU REDUNANT SWITCHOVER SYSTEM", December 2006, describes a switchover unit (NSU) that is designed to provide improved reliability for advanced satellite communications system. The NSU consists of a control unit, switch modules and frequency converters.

US 4,521,871 A discloses an active programmable controller having a duplex structure with a primary system and a redundant back-up system. Each system comprises a memory module a CPU module, an I/O scanner module and a front panel module. The front panel module is configured to display data and diagnostic information from the memory module or a processor read/write memory of the CPU module. The CPU module periodically performs a number of housekeeping chores. In particular, after a control program has been executed a check is made of a system data section to determine if any major fault conditions have occurred. The system loops back to commence another scan if no problems exist. Otherwise, the system shuts down. When such malfunction occurs in the active or primary programmable controller, a backplane fault line rises to a logic high voltage. This is input to tristate gates to alert the I/O scanner module of the problem. Input to a NAND gate drives a control line and indicates that control is to be switched to the back-up system. The back-up system receives this signal at a gate. The status of the programmable controller, either active or back-up, is determined by the state of an input control line.

### DISCLOSURE OF THE INVENTION

Therefore, an object of the present invention is to provide an apparatus for displaying a state of a multi-control system of a power plant, capable of allowing a user to check a state of a duplex system and/or a triplex system easily and rapidly, by displaying a state of the multi-control system which supports the duplex system and/or the triplex system.

To achieve these and other advantages and in accordance with the purpose of the present invention, as embodied and broadly described herein, there is provided an apparatus according to claim 1. Embodiments of the invention are presented in the dependent claims.

According to an aspect, there is provided an apparatus for displaying a state of a multi-control system of a power plant, the system which supports both a first multiplexing system and a second multiplexing system, the apparatus comprising: a first state display apparatus including a first controller configured to determine priorities of a plurality of modules of the first multiplexing system, and a first display unit configured to display priorities determined by the first controller; and a second state display apparatus including a second controller configured to determine priorities of a plurality of modules of the second multiplexing system, and a second display unit configured to display priorities determined by the second controller, wherein the priorities of the first state display apparatus, and the priorities of the second state display apparatus are displayed in a distinguished manner from each other.

### [Effects of the present invention]

In the apparatus and method for displaying a state of a multiplexing system of a power plant according to the present invention, a state of a multiplexing system of a power plant is displayed, the control system which supports a duplex system and/or a triplex system. This can allow a user to check a state of a duplex system and/or a triplex system easily and rapidly.

In the apparatus and method for displaying a state of a multiplexing system of a power plant according to the present invention, a state of a multiplexing system which supports both a duplex system and a triplex system is displayed as a single letter. This can allow setting information and state information of the multiplexing system to be displayed on a limited surface area of each module.

### BRIEF DESCRIPTION OF THE DRAWINGS

FIG. 1 is a configuration view of an apparatus for displaying a state of a multiplexing system of a power plant according to a first embodiment of the present invention;
FIG. 2 is an exemplary view illustrating a duplex system to which an apparatus for displaying a state of a multiplexing system of a power plant according to a first embodiment of the present invention has been applied;
FIG. 3 is an exemplary view illustrating a triplex system to which an apparatus for displaying a state of a multiplexing system of a power plant according to a first embodiment of the present invention has been applied;
FIG. 4 is a configuration view of an apparatus for displaying a state of a duplex system and a triplex system according to a second embodiment of the present invention;
FIG. 5 is an exemplary view of a duplex system and a triplex system according to a second embodiment of the present invention; and
FIG. 6 is another exemplary view of a duplex system and a triplex system according to a second embodiment of the present invention.

### MODES FOR CARRYING OUT THE PREFERRED EMBODIMENTS

Reference will now be made in detail to the preferred embodiments of the present invention, examples of which are illustrated in the accompanying drawings. It will also be apparent to those skilled in the art that various modifications and variations can be made in the present invention without departing from the scope of the invention as defined in the claims.

Desirable embodiments according to the present invention are described referring to the accompanying drawings. Like constituent elements are given like reference numerals and a redundant description of the like constituent elements is omitted.

Generally, a multiplexing method such as a duplex system and a triplex system is widely used as a method for enhancing reliability of a multi-control system of a power plant. Each of the duplex system and the triplex system may be configured as an additional system according to a design and a purpose thereof. Each of the duplex system and the triplex system has its own information on an inner state and setting. In case of a system which supports both a duplex system and a triplex system may be additionally provided with information on different states and settings.

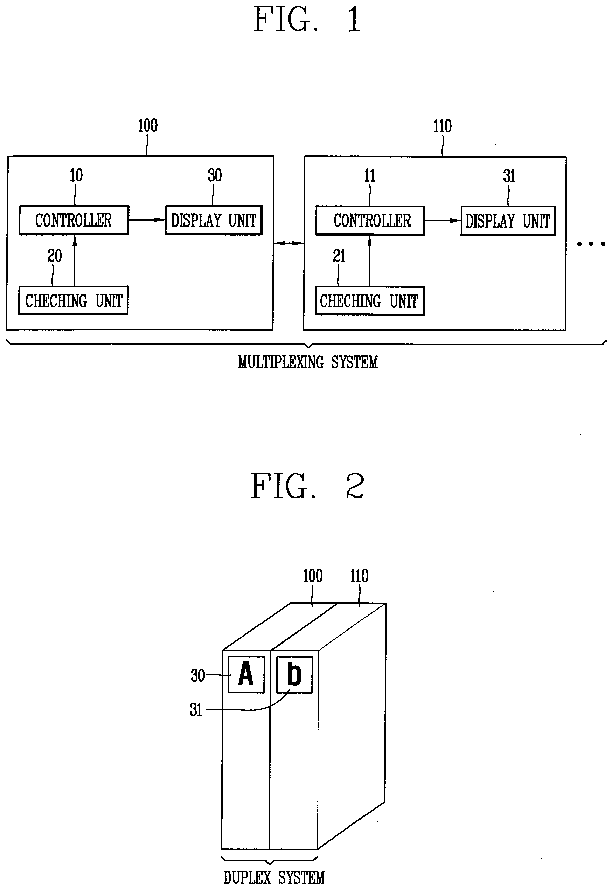

Hereinafter, with reference to FIGS. 1 to 3, will be explained an apparatus capable of more efficiently displaying state information of a multi-control system of a power plant, the multi-control system which supports a multiplexing system such as a duplex system or a triplex system.

A first embodiment of the present invention relates to a technique for automatically determining a priority of each module and displaying the determined priority on each module, in a multiplexing system provided with a plurality of heterogeneous modules. In a case where the multiplexing system is a duplex system, the priority is a means to distinguish a main module and a sub module from each other. In a case where the multiplexing system is a triplex system, the priority is a means to distinguish a main module, a first sub module, and a second sub module from one another.

FIG. 1 is a configuration view of an apparatus for displaying a state of a multi-control system of a power plant according to a first embodiment of the present invention.

As shown in FIG. 1, in a multi-control system of a power plant which supports a multiplexing system, e.g., a duplex system provided with two homogeneous modules or a triplex system provided with three homogeneous modules, the apparatus includes checking units 20, 21 configured to periodically check an operation state of each module of the multiplexing system; controllers 10, 11 configured to determine priorities of the modules based on the check result, and to generate preset information according to the determined priorities, the preset information such as one or more character letters, alphabetic letters, special letters or a combination thereof; and display units 30, 31 configured to display the generated information on the modules.

The multiplexing system may be implemented as a duplex system or a triplex system. The duplex system consists of two homogeneous modules, and the triplex system consists of three homogeneous modules. The modules of the multiplexing system may be one of operation modules, control modules and communication modules, or a combination thereof.

The controllers 10, 11 display first information (e.g., one or more character letters, alphabetic letters, special letters or a combination thereof), on the modules of the multiplexing system by the display units 30, 31, the first information preset according to priorities preset to the modules. If the priorities determined based on the checking result by the checking units 20, 21 are different from the preset priorities, the controllers 10, 11 display second information rather than the preset first information on the modules of the multiplexing system, the second information preset according to the determined priorities. Each module is allocated with two information preset to distinguish a main module from one or more sub modules. The information allocated to each module may be the same or different from each other. For instance, the module may be displayed as 'Aaa', 'Abb' or 'Abc'.

The preset first information may be information by which a main module and a sub module of the multiplexing system are distinguished from each other, based on the preset priorities. The preset second information may be information by which a main module and a sub module of the multiplexing system are distinguished from each other, based on the determined priorities or the check result.

The controller 10, the checking unit 20 and the display unit 30 may be disposed at each module of the multiplexing system. For instance, in case of a duplex system which consists of a first module 100 and a second module 110, the first controller 10 of the first module 100 receives a check result on the first module 100, from the first checking unit 20 of the first module 100. Then the first controller 10 determines a first penalty score corresponding to the received check result. Then the first controller 10 receives a second penalty score, from the controller 11 of the second module 110, through wired or wireless communication. If the first penalty score is lower than the second penalty score, the first controller 10 determines the first module 100 as a main module by providing a highest priority to the first module 100. Then the first controller 10 displays, on the first display unit 30 of the first module 100, information indicating that the first module 100 is a main module (e.g., one or more character letters, an alphabetic letter, a special letter or a combination thereof). The first state display apparatus of the first module 100 includes the first controller 10, the first checking unit 20, and the first display unit 30.

On the other hand, the second controller 11 of the second module 110 receives a check result on the second module 110, from the second checking unit 21 of the second module 110. Then the second controller 11 determines a second penalty score corresponding to the received check result. Then the second controller 11 receives a first penalty score, from the controller 10 of the first module 100, through wired or wireless communication. If the first penalty score is lower than the second penalty score, the second controller 11 determines the second module 110 as a sub module by providing a priority lower than the highest priority to the second module 110. Then the second controller 11 displays, on the second display unit 31 of the second module 110, information indicating that the second module 110 is a sub module (e.g., one or more character letters, an alphabetic letter, a special letter or a combination thereof). The second state display apparatus of the second module 110 includes the second controller 11, the second checking unit 21, and the second display unit 31.

As another embodiment, the checking unit 20 and the display unit 30 may be disposed at each module of the multiplexing system. The controller 10 may be provided in one in number. In this case, the controller 10 may be disposed at one of the modules of the multiplexing system, or may be disposed at another region rather than the modules of the multiplexing system. For instance, in case of a duplex system which consists of a first module 100 and a second module 110, the first controller 10 receives a first check result on the first module 100, from the first checking unit 20 of the first module 100. Then the first controller 10 determines a first penalty score corresponding to the received first check result. Then the first controller 10 receives a second check result from the checking unit 21 of the second module 110, through wired or wireless communication, thereby determining a second penalty score corresponding to the second check result. If the first penalty score is lower than the second penalty score, the first controller 10 determines the first module 100 as a main module by providing a highest priority to the first module 100. Then the first controller 10 displays, on the first display unit 30 of the first module 100, information indicating that the first module 100 is a main module (e.g., one or more character letters, an alphabetic letter, a special letter or a combination thereof). If the first penalty score is lower than the second penalty score, the first controller 10 determines the second module 110 as a sub module by providing a priority lower than the highest priority to the second module 110. Then the first controller 10 displays, on the second display unit 31 of the second module 110, information indicating that the second module 110 is a sub module (e.g., a single letter, one or more character letters, an alphabetic letter, a special letter or a combination thereof).

In order to determine penalty scores and main/sub states of the modules of the duplex system or the modules of the triplex system, various data communication protocols may be applied to the present invention. The present invention needs not be limited to a specific protocol. In a case where the controller 10, the checking unit 20 and the display unit 30 are disposed at each module of the multiplexing system (duplex system or triplex system), the controllers 10, 11 are connected to each other through wired or wireless data communication.

If one of the modules of the multiplexing system (e.g., module 100) is sensed as an abnormal module, the controller (e.g., controller 10) may generate a control signal for displaying specific information, and may output the control signal to the display unit (e.g., display unit 30) of the abnormal module.

The display unit (e.g., display unit 30) of the abnormal module (e.g., module 100) displays information thereon (e.g., one or more character letters, an alphabetic letters, a special letter, a combination thereof, etc.), in a specific manner based on the control signal, thereby informing a user of the abnormal module (erroneous module). A method for detecting an abnormal module based on the check result has been already known, and thus its detailed explanations will be omitted. For instance, the display unit (e.g., display unit 30) of the abnormal module (e.g., module 100) may display information (e.g., one or more character letters, an alphabetic letter, a special letter, a combination thereof, etc.), in a specific color (e.g., red, blue, etc.) or in a flickering manner. The information displayed on the display unit may indicate a normal state or an abnormal state of a specific module, and may indicate whether the specific module is a main module or a sub module.

The display units 30, 31 may be display means or liquid crystal display (LCD) devices, such as different-color light emitting diodes (LED) and single-color LEDs.

The display units 30, 31 may include a relay (not shown) for flickering information (e.g., one or more character letters, alphabetic letters, special letters, a combination thereof, etc.), based on the control signal. The display units 30, 31 may further include a timer (not shown) for flickering information (e.g., one or more character letters, alphabetic letters, special letters, a combination thereof, etc) based on the control signal for a preset time (e.g., 10 minutes). The preset time may be changed according to a user or designer's intention.

The checking units 20, 21 check whether monitoring modules are normal or abnormal, whether network communication is normal or abnormal, etc., and output a check result to the controller 10. The monitoring modules are configured to monitor an operation state of an electronic circuit (PCB) such as a memory device of a duplex system or a triplex system, an operation state of a control logic, and a state of a thermoelectric power plant.

Hereinafter, a duplex system, to which an apparatus for displaying a state of a multi-control system of a power plant according to a first embodiment of the present invention has been applied, will be explained in more detail with reference to FIG. 2.

FIG. 2 is an exemplary view illustrating a duplex system to which an apparatus for displaying a state of a multi-control system of a power plant according to a first embodiment of the present invention has been applied;

As shown in FIG. 2, the duplex system consists of two homogeneous modules. The respective modules may display single letters such as 'A' and 'B' on the display units 30, 31.

The control units 10, 11 display one main module of the duplex system in a capital letter, and another sub module in a small letter, so that the main module and the sub module of the duplex system can be distinguished from each other. For instance, the controller 10 displays a capital letter (e.g., 'A') on the display unit 30 of one module (e.g., main module 100) having a highest priority, among modules of the duplex system. And the controller 10 displays a small letter (e.g., 'b') on the display unit 31 of another sub module 110. Through the single letters 'A' and 'b' displayed on the display units 30, 31 of the two modules, it can be seen that the first module 100 and the second module 110 constitute a duplex system. Through the capital letter 'A' displayed on the display unit 30 of the first module 100, it can be seen that the first module 100 is a main module. Through the small letter 'b' displayed on the display unit 31 of the second module 110, it can be seen that the second module 110 is a sub module. The single letter may be modified to various letters according to a user or designer's intention.

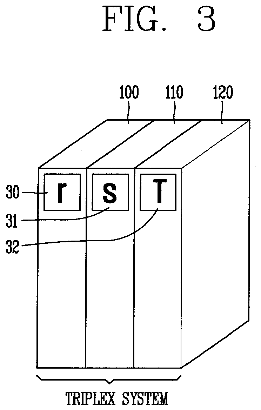

Hereinafter, a triplex system, to which an apparatus for displaying a state of a multi-control system of a power plant according to a first embodiment of the present invention has been applied, will be explained in more detail with reference to FIG. 3.

FIG. 3 is an exemplary view illustrating a triplex system to which an apparatus for displaying a state of a multi-control system of a power plant according to a first embodiment of the present invention has been applied.

As shown in FIG. 3, the triplex system consists of three homogeneous modules. The respective modules may display single letters such as 'R', 'S' and 'T' on display units 30, 31 or 32. The single letters may be modified to various letters according to a user or designer's intention.

The controller (e.g., controller 10), disposed at each module or at one of modules 100, 110, 120 of the triplex system, displays one main module of the triplex system in a capital letter, and displays the rest sub modules in small letters. Accordingly, the main module and the sub modules can be distinguished from each other. For instance, the controller 10 displays a capital letter (e.g., 'T') on a display unit 32 of a module having a highest priority (e.g., the main module 120) among the modules 100, 110, 120 of the triplex system, and displays small letters (e.g., 'r', 's') on display units 30, 31 of the rest sub modules 100, 110. Through the single letters 'r', 's', 'T' displayed on the display units 30, 31, 32 of the three modules 100, 110, 120, it can be seen that the first module 100, the second module 110 and the third module 120 constitute a triplex system. Through the small letters 'r', 's' displayed on the display units 30, 31 of the first module 100 and the second module 110, it can be seen that both of the first module 100 and the second module 110 are sub modules. Through the capital letter 'T' displayed on the display unit 32 of the third module 120, it can be seen that the third module 120 is a main module.

In a case where at least two of a plurality of modules of the multiplexing system have a highest priority (e.g., have the same penalty score), the controllers 10, 11 determine a module preset to have a highest priority as a main module.

In the apparatus for displaying a state of a multi-control system according to a first embodiment of the present invention, a type of a multiplexing system (e.g., duplex system or triplex system) can be easily determined. Further, a main module and a sub module of a duplex system can be easily distinguished from each other. A main module and sub modules of a triplex system can be also easily distinguished from one another.

A second embodiment of the present invention relates to a technique for displaying information for distinguishing a first multiplexing system and a second multiplexing system from each other, in a multi-control system of a power plant, the multi-control system having heterogeneous multiplexing systems. In this case, the information is displayed on partial or whole modules of the first multiplexing system and the second multiplexing system. Like in the first embodiment, each of the first multiplexing system and the second multiplexing system may be provided with a plurality of homogenous modules, and priorities of the respective modules may be automatically determined. And the determined priorities may be displayed on the respective modules in a distinguished manner.

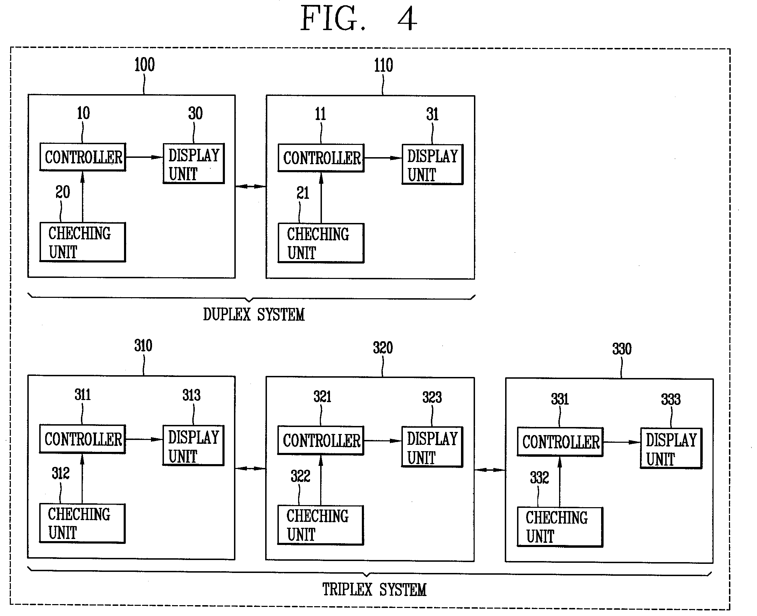

Hereinafter, with reference to FIGS. 4 to 6, will be explained an apparatus and method capable of more efficiently displaying state information of a multiplexing system (a duplex system and a triplex system) according to a second embodiment of the present invention, in a multi-control system of a power plant which supports both of a duplex system composed of two homogenous modules and a triplex system composed of three homogeneous modules.

FIG. 4 is a configuration view of an apparatus for displaying a state of a duplex system and a triplex system according to a second embodiment of the present invention.

Referring to FIG. 4, a first module 210 and a second module 220 of a duplex system are homogeneous modules. A third module 310, a fourth module 320 and a fifth module 330 of a triplex system are also homogeneous modules. However, the modules 210, 220 of the duplex system, and the modules 310, 320, 330 of the triplex system may be heterogeneous modules.

The controller 211, the checking unit 212, and the display unit 213 may be disposed at each module of the duplex system and the triplex system. For instance, in case of a duplex system which consists of a first module 210 and a second module 220, a first controller 211 of the first module 210 receives a check result on the first module 210, from a checking unit 212 of the first module 210. Then the first controller 211 determines a first penalty score corresponding to the received check result. Then the first controller 211 receives a second penalty score from a controller 221 of the second module 220, through wired or wireless communication. If the first penalty score is lower than the second penalty score, the first controller 211 determines the first module 210 as a main module by providing a highest priority to the first module 210. Then the first controller 211 displays, on a first display unit 213 of the first module 210, information indicating that the first module 210 is a main module (e.g., one or more character letters, an alphabetic letter, a special letter or a combination thereof). On the other hand, a second controller 221 of the second module 220 receives a check result on the second module 220, from a checking unit 222 of the second module 220. Then the second controller 221 determines a second penalty score corresponding to the received check result. Then the second controller 221 receives a first penalty score from the controller 211 of the first module 210, through wired or wireless communication. If the first penalty score is lower than the second penalty score, the second controller 221 determines the second module 220 as a sub module by providing a priority lower than the highest priority to the second module 220. Then the second controller 221 displays, on a second display unit 223 of the second module 220, information indicating that the second module 220 is a sub module (e.g., one or more character letters, an alphabetic letter, a special letter or a combination thereof).

In case of a triplex system which consists of a third module 310, a fourth module 320 and a fifth module 330, a third controller 311 of the third module 310 receives a check result on the third module 310, from a third checking unit 312 of the third module 310. Then the third controller 311 determines a third penalty score corresponding to the received check result. Then the third controller 311 receives a fourth penalty score and a fifth penalty score from controllers 321, 331 of the fourth module 320 and the fifth module 330, through wired or wireless communication. If the third penalty score is lower than the fourth and fifth penalty scores, the third controller 311 determines the third module 310 as a main module by providing a highest priority to the third module 310. Then the third controller 311 displays, on the third display unit 313 of the third module 310, information indicating that the third module 310 is a main module (e.g., one or more character letters, an alphabetic letter, a special letter or a combination thereof). On the other hand, the fourth controller 321 of the fourth module 320 receives a check result on the fourth module 320, from a checking unit 322 of the fourth module 320. Then the fourth controller 321 determines a fourth penalty score corresponding to the received check result. Then the fourth controller 321 receives a third penalty score and a fifth penalty score from the controllers 311, 331 of the third module 310 and the fifth module 330, through wired or wireless communication. If the fourth penalty score is higher than the third and fifth penalty scores, the fourth controller 321 determines the fourth module 320 as a sub module by providing a priority lower than the highest priority to the fourth module 320. Then the fourth controller 321 displays, on the fourth display unit 323 of the fourth module 320, information indicating that the fourth module 320 is a sub module (e.g., one or more character letters, an alphabetic letter, a special letter or a combination thereof). The fifth controller 331 of the fifth module 330 receives a check result on the fifth module 330, from a checking unit 332 of the fifth module 330. Then the fifth controller 331 determines a fifth penalty score corresponding to the received check result. Then the fifth controller 331 receives the third penalty score from the controller 311 of the third module 310, and receives the fourth penalty score from the controller 321 of the fourth module 320, through wired or wireless communication. If the fifth penalty score is higher than the third and fourth penalty scores, the fifth controller 331 determines the fifth module 330 as a sub module by providing a priority lower than the highest priority to the fifth module 330. Then the fifth controller 331 displays, on the fifth display unit 333 of the fifth module 330, information indicating that the fifth module 330 is a sub module (e.g., a single letter, one or more character letters, an alphabetic letter, a special letter or a combination thereof).

The checking unit 212 and the display unit 213 may be disposed at each module of the duplex system and at each module of the triplex system. The controller 211 may be provided in one in the duplex system, and in one in the triplex system. In this case, the controller 211 may be disposed at one of the modules of the duplex system, or may be disposed at another region rather than the modules. The controller 311 may be disposed at one of the modules of the triplex system, or may be disposed at another region rather than the modules.

In case of a duplex system which consists of the first module 210 and the second module 220, the first controller 211 of the first module 210 receives a first check result on the first module 210, from the first checking unit 212 of the first module 210. Then the first controller 211 determines a first penalty score corresponding to the received first check result. Then the first controller 211 receives a second check result, from the checking unit 221 of the second module 220, through wired or wireless communication. Then the first controller 211 determines a second penalty score corresponding to the second check result. If the first penalty score is lower than the second penalty score, the first controller 211 determines the first module 210 as a main module by providing a highest priority to the first module 210. Then the first controller 211 displays, on the first display unit 213 of the first module 210, information indicating that the first module 210 is a main module (e.g., one or more character letters, an alphabetic letter, a special letter or a combination thereof). If the first penalty score is lower than the second penalty score, the second controller 221 determines the second module 220 as a sub module by providing a priority lower than the highest priority to the second module 220. Then the second controller 221 displays, on the second display unit 223 of the second module 220, information indicating that the second module 220 is a sub module (e.g., a single letter, one or more character letters, an alphabetic letter, a special letter or a combination thereof).

In case of a triplex system which consists of the third module 310, the fourth module 320 and the fifth module 330, the third controller 311 of the third module 310 receives a third check result on the third module 310, from the third checking unit 312 of the third module 310. Then the third controller 311 determines a third penalty score corresponding to the received third check result. Then the third controller 311 receives a fourth check result and a fifth check result, from the checking units 322, 332 of the fourth module 320 and the fifth module 320, 330, through wired or wireless communication. Then the third controller 311 determines a fourth penalty score corresponding to the fourth check result, and a fifth penalty score corresponding to the fifth check result. If the third penalty score is lower than the fourth and fifth penalty scores, the third controller 311 determines the third module 310 as a main module by providing a highest priority to the third module 310. Then the third controller 311 displays, on the third display unit 313 of the third module 310, information indicating that the third module 310 is a main module (e.g., a single letter, one or more character letters, an alphabetic letter, a special letter or a combination thereof). On the other hand, the fourth controller 321 of the fourth module 320 receives a fourth check result on the fourth module 320, from the checking unit 322 of the fourth module 320. Then the fourth controller 321 determines a fourth penalty score corresponding to the received fourth check result. Then the fourth controller 321 receives a third check result and a fifth check result from the checking units 312, 332 of the third module 310 and the fifth module 330, through wired or wireless communication. Then the fourth controller 321 determines a third penalty score corresponding to the third check result, and a fifth penalty score corresponding to the fifth check result. If the fourth penalty score is higher than the third and fifth penalty scores, the fourth controller 321 determines the fourth module 320 as a sub module by providing a priority lower than the highest priority to the fourth module 320. Then the fourth controller 321 displays, on the fourth display unit 323 of the fourth module 320, information indicating that the fourth module 320 is a sub module (e.g., a single letter, one or more character letters, an alphabetic letter, a special letter or a combination thereof).

The fifth controller 331 of the fifth module 330 receives a fifth check result on the fifth module 330, from the checking unit 332 of the fifth module 330. Then the fifth controller 331 determines a fifth penalty score corresponding to the received check result. Then the fifth controller 331 receives a third check result and a fourth check result from the checking units 312, 322 of the third module 310 and the fourth module 320, through wired or wireless communication. Then the fifth controller 331 determines a third penalty score corresponding to the third check result, and a fourth penalty score corresponding to the fourth check result. If the fifth penalty score is higher than the third and fourth penalty scores, the fifth controller 331 determines the fifth module 330 as a sub module by providing a priority lower than the highest priority to the fifth module 330. Then the fifth controller 331 displays, on the fifth display unit 333 of the fifth module 330, information indicating that the fifth module 330 is a sub module (e.g., a single letter, one or more character letters, an alphabetic letter, a special letter or a combination thereof).

Once a specific module (e.g., 210) among the modules of the duplex system and the triplex system is detected as an abnormal module, the controllers 210, 211, 311, 321, 331 generate a control signal. Then the controllers 210, 211, 311, 321, 331 output the control signal to the display unit (e.g., 213) of the abnormal module.

The display unit (e.g., 213) of the abnormal module (e.g., 210) highlights, based on the control signal, information displayed thereon (e.g., a single letter, one or more character letters, an alphabetic letter, a special letter or a combination thereof), thereby informing a user that the specific module is in an abnormal state (erroneous state). For instance, the display unit (e.g., 213) of the abnormal module (e.g., 210) may display information displayed thereon (e.g., a single letter, one or more character letters, an alphabetic letter, a special letter or a combination thereof) in a specific color (e. g. red, blue, etc.) based on the control signal, or may flicker the information based on the control signal, thereby highlighting the information displayed thereon.

Information displayed on the display units 213, 223, 313, 323, 333 indicates whether corresponding modules are in a normal state or an abnormal state, as well as whether the corresponding modules are a main module or a sub module.

The display units 213, 223, 313, 323, 333 may be display means or liquid crystal display (LCD) means such as different-color light emitting diodes (LED) and single-color LEDs.

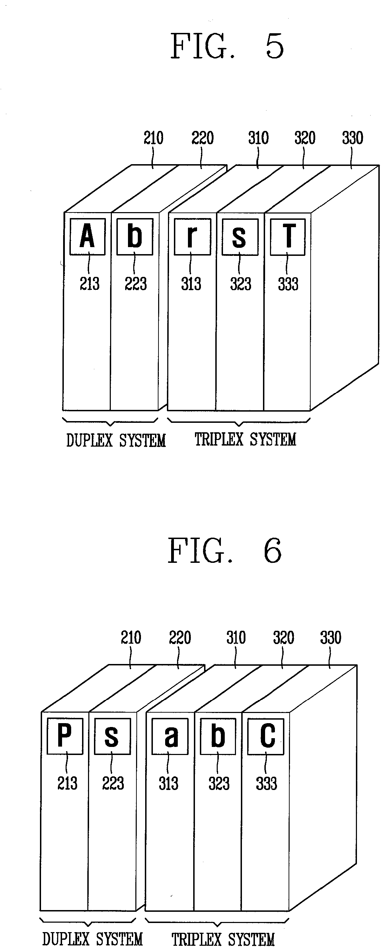

FIG. 5 is an exemplary view of a duplex system and a triplex system according to a second embodiment of the present invention.

As shown in FIG. 5, the controller 211 displays a capital letter (e.g., 'A') on the display unit 213 of one module having a highest priority (e.g., main module 210) among modules of a duplex system. The controller 221 displays a small letter (e.g., 'b') on the display unit 223 of the rest sub module 220. Through the single letters 'A' and 'b' displayed on the display units 213, 223 of the two modules, a user can recognize that the first module 210 and the second module 220 constitute a duplex system. The capital letter 'A' displayed on the display unit 213 of the first module 210 indicates that the first module 210 is a main module. The small letter 'b' displayed on the display unit 223 of the second module 220 indicates that the second module 220 is a sub module.

The controller 331 displays a capital letter (e.g., 'T') on the display unit 333 of one module having a highest priority (e.g., main module 330) among modules of the triplex system. The controllers 311, 321 display small letters (e.g., 'r' and 's') on the display units 313, 323 of the rest sub modules 310, 320. Through the single letters 'r', 's' and 'T' displayed on the display units 313, 323, 333 of the third to fifth modules 310, 320, 330, a user can recognize that the third module 310, the fourth module 320 and the fifth module 330 constitute a triplex system. The small letters 'r' and 's' displayed on the display units 313, 323 of the third and fourth modules 310, 320 indicate that the third and fourth modules 310, 320 are sub modules. The capital letter'T' displayed on the display unit 333 of the fifth module 330 indicates that the fifth module 330 is a main module.

FIG. 6 is another exemplary view of a duplex system and a triplex system according to a second embodiment of the present invention.

As shown in FIG. 6, the controller 211 displays a capital letter (e.g., 'P') on the display unit 213 of one module having a highest priority (e.g., main module 210) among modules of the duplex system. The controller 221 displays a small letter (e.g. 's') on the display unit 223 of the rest sub module 220. Through the single letters 'P' and 's' displayed on the display units 213, 223 of the two modules, a user can recognize that the first module 210 and the second module 220 constitute a duplex system. The capital letter 'P' displayed on the display unit 213 of the first module 210 indicates that the first module 210 is a main module. The small letter's' displayed on the display unit 223 of the second module 220 indicates that the second module 220 is a sub module.

The controller 331 displays a capital letter (e.g., 'C') on the display unit 333 of one module having a highest priority (e.g., main module 330) among modules of the triplex system. The controllers 311, 321 display small letters (e.g., 'a' and 'b') on the display units 313, 323 of the rest sub modules 310, 320. Through the single letters 'a', 'b' and 'C' displayed on the display units 313, 323, 333 of the third to fifth modules 310, 320, 330, a user can recognize that the third module 310, the fourth module 320 and the fifth module 330 constitute a triplex system. The small letters 'a' and 'b' displayed on the display units 313, 323 of the third and fourth modules 310, 320 indicate that the third and fourth modules 310, 320 are sub modules. The capital letter 'C' displayed on the display unit 333 of the fifth module 330 indicates that the fifth module 330 is a main module.

In the apparatus for displaying a state of a multi-control system according to a second embodiment of the present invention, a type of a multiplexing system (e.g., duplex system or triplex system) can be easily determined. Further, a main module and a sub module of a duplex system can be easily distinguished from each other. A main module and sub modules of a triplex system can be also easily distinguished from each other.

As aforementioned, in the apparatus and method for displaying a state of a multi-control system of a power plant which supports a multiplexing system such as a duplex system and/or a triplex system according to the present invention, a state of the multi-control system is displayed. This can allow a user to check a state of a duplex system and/or a triplex system easily and rapidly.

In the apparatus and method for displaying a state of a multi-control system of a power plant according to the present invention, a state of a multi-control system which supports both a duplex system and a triplex system is displayed as a single letter. This can allow setting information and state information of the multi-control system, to be displayed on a limited surface area of each module.

## Claims

1. An apparatus for displaying a state of a multiplexing system of a power plant, the multiplexing system provided with a plurality of modules comprising at least one main module and at least one sub-module, wherein a main module and a sub-module are distinguished by providing a priority of each module, the apparatus comprising:
at least one controller (10, 11) configured to determine priorities of the plurality of modules of the system of the power plant;
checking units (20, 21) configured to check an operation state of each module,
wherein the at least one controller (10, 11) is configured to determine the priorities of the plurality of modules based on the check results of the checking units (20, 21) and to generate preset information according to the determined priorities, and wherein the at least one controller (10, 11) is configured to determine the priority of the plurality of modules by comparing penalty scores of the modules with each other and the penalty scores are calculated based on the check results by the checking units (20, 21),
display units (30, 31) configured to display a preset information on the plurality of modules,
wherein the displayed preset information is first information preset according to priorities preset to the modules or, in case the priorities determined by the controller based on the checking result by the checking units (20, 21) are different from the preset priorities, second information preset according to the determined priorities,
the at least one controller (10,11) is disposed at one of the plurality of modules of the multiplexing system and each of the checking units (20, 21) and each of the display units (30, 31) is disposed at a respective one of the plurality of modules of the multiplexing system, and
the preset information displayed on each of the display units (30, 31) indicates whether the respective module is a main module or a sub-module.

2. The apparatus of claim 1, wherein the display units (30, 31) are configured to display the preset information as single letters.

3. The apparatus of claim 2, wherein each of the single letters is one of the group comprising an alphabetical letter, a special letter and a character letter.

4. The apparatus of claim 2 or 3, wherein the display units (30, 31) are configured to display on a module having a highest priority a capital alphabet, and to display on the remaining modules a small alphabet.

5. The apparatus of any one of claims 1 to 4, wherein the display units (30, 31) are configured to display a module determined as an erroneous module by the checking unit (20, 21), in a flickering manner.

## Patentansprüche

1. Vorrichtung zum Anzeigen eines Zustands eines Multiplexsystems eines Kraftwerks, wobei das Multiplexsystem mit mehreren Modulen versehen ist, die mindestens ein Hauptmodul und mindestens ein Untermodul umfassen, wobei ein Hauptmodul und ein Untermodul durch Bereitstellen einer Priorität jedes Moduls unterschieden werden, wobei die Vporrichtung umfasst:
mindestens eine Steuerung (10, 11), die eingerichtet ist, Prioritäten der mehreren Module des Systems des Kraftwerks zu bestimmen;
Prüfeinheiten (20, 21), die eingerichtet sind, einen Betriebszustand jedes Moduls zu prüfen,
wobei die mindestens eine Steuerung (10, 11) eingerichtet ist, die Prioritäten der mehreren Module basierend auf den Prüfergebnissen der Prüfeinheiten (20, 21) zu bestimmen und voreingestellte Informationen gemäß den bestimmten Prioritäten zu erzeugen, und wobei die mindestens eine Steuerung (10, 11) eingerichtet ist, die Priorität der mehreren Module durch Vergleichen von Penalty-Scores der Module miteinander zu bestimmen, und die Penalty-Scores basierend auf den Prüfergebnissen durch die Prüfeinheiten (20, 21) berechnet werden,
Anzeigeeinheiten (30, 31), die eingerichtet sind, eine voreingestellte Information an den mehreren Modulen anzuzeigen,
wobei die angezeigte voreingestellte Information eine erste Information ist, die gemäß Prioritäten voreingestellt ist, die in den Modulen voreingestellt sind, oder im Falle, dass die durch die Steuerung basierend auf dem Prüfergebnis durch die Prüfeinheiten (20, 21) bestimmten Prioritäten von den voreingestellten Prioritäten verschieden sind, eine zweite Information ist, die gemäß den bestimmten Prioritäten voreingestellt ist,
wobei die mindestens eine Steuerung (10, 11) an einem der mehreren Module des Multiplexsystems angeordnet ist und jede der Prüfeinheiten (20, 21) und jede der Anzeigeeinheiten (30, 31) an einem jeweiligen der mehreren Module des Multiplexsystems angeordnet sind, und
wobei die an jeder der Anzeigeeinheiten (30, 31) angezeigte voreingestellte Information angibt, ob das jeweilige Modul ein Hauptmodul oder ein Untermodul ist.

2. Vorrichtung nach Anspruch 1, wobei die Anzeigeeinheiten (30, 31) eingerichtet sind, die voreingestellten Informationen als einzelne Buchstaben anzuzeigen.

3. Vorrichtung nach Anspruch 2, wobei jeder der einzelnen Buchstaben einer aus der Gruppe umfassend einen alphabetischen Buchstaben, ein Sonderzeichen und ein Symbol umfasst.

4. Vorrichtung nach Anspruch 2 oder 3, wobei die Anzeigeeinheiten (30, 31) eingerichtet sind, an einem Modul mit einer höchsten Priorität einen großgeschriebenen alphabetischen Buchstaben anzuzeigen und an den verbleibenden Modulen einen kleingeschriebenen alphabetischen Buchstaben anzuzeigen.

5. Vorrichtung nach einem der Ansprüche 1 bis 4, wobei die Anzeigeeinheiten (30, 31) eingerichtet sind, ein durch die Prüfeinheit (20, 21) als fehlerhaftes Modul bestimmtes Modul in einer flackernden Weise anzuzeigen.

## Revendications

1. Dispositif pour l'affichage d'état d'un système de multiplexage d'une centrale électrique, ledit système de multiplexage étant pourvu d'une pluralité de modules comprenant au moins un module principal et au moins un sous-module, un module principal et un sous-module étant distingués par attribution d'une priorité de chaque module, ledit dispositif comprenant :
au moins un contrôleur (10, 11) prévu pour déterminer les priorités de la pluralité de modules du système du centrale électrique ;
des unités de contrôle (20, 21) prévues pour contrôler l'état de fonctionnement de chaque module,
où ledit au moins un contrôleur (10, 11) est prévu pour déterminer les priorités de la pluralité de modules sur la base des résultats de contrôle des unités de contrôle (20, 21), et pour générer des informations prédéfinies en fonction des priorités déterminées, et où ledit au moins un contrôleur (10, 11) est prévu pour déterminer la priorité de la pluralité de modules par comparaison entre eux de scores de pénalités des modules, et les scores de pénalités sont calculés sur la base des résultats de contrôle par les unités de contrôle (20, 21),
des unités d'affichage (30, 31) prévues pour afficher des informations prédéfinies sur la pluralité de modules,
où les informations prédéfinies affichées sont des premières informations prédéfinies en fonction de priorités pré-affectées aux modules ou, si les priorités déterminées par le contrôleur sur la base du résultat de contrôle par les unités de contrôle (20, 21) sont différentes des priorités prédéfinies, des deuxièmes informations prédéfinies en fonction des priorités déterminées,
ledit au moins un contrôleur (10,11) est disposé au niveau d'un module de la pluralité de modules du système de multiplexage, et chacune des unités de contrôle (20, 21) ainsi que chacune des unités d'affichage (30, 31) sont disposées au niveau d'un module respectif de la pluralité de modules du système de multiplexage, et
les informations prédéfinies affichées sur chacune des unités d'affichage (30, 31) indiquent si le module respectif est un module principal ou un sous-module.

2. Dispositif selon la revendication 1, où les unités d'affichage (30, 31) sont prévues pour afficher les informations prédéfinies comme caractères uniques.

3. Dispositif selon la revendication 2, où chacun des caractères uniques appartient au groupe comprenant un caractère alphabétique, un caractère spécial et une lettre.

4. Dispositif selon la revendication 2 ou la revendication 3, où les unités d'affichage (30, 31) sont prévues pour afficher sur un module ayant une priorité maximale un alphabet en majuscules, et pour afficher sur les modules restant un alphabet en minuscules.

5. Dispositif selon l'une des revendications 1 à 4, où les unités d'affichage (30, 31) sont prévues pour afficher avec scintillement un module déterminé comme module erroné par l'unité de contrôle (20, 21).
